# EUROPEAN PATENT APPLICATION

(11) **EP 4 749 447 A1**
(43) Date of publication of application: **27.05.2026**
(21) Application number: 24899363.6
(22) Date of filing: 30.08.2024
(51) Int. Cl.: G06F 9/48

(54) **SYSTEM SHUTDOWN CONTROL METHOD AND APPARATUS, ELECTRONIC DEVICE, AND READABLE STORAGE MEDIUM**

(30) Priority: 05.12.2023 CN 202311656758
(71) Applicant: HUAWEI TECHNOLOGIES CO., LTD., Shenzhen 518129 (CN)
(72) Inventor: ZHANG, Chunxin, Shenzhen, Guangdong 518129 (CN)
(74) Representative: Körber, Martin Hans
(86) International application number: PCT/CN2024/115933
(87) International publication number: WO 2025/118717

(57) **Abstract**

This application provides a system shutdown control method and apparatus, an electronic device, and a readable storage medium, and relates to the field of terminal technologies. The control method includes: in response to a shutdown operation, obtaining a plurality of target tasks to be processed before system shutdown and a task type of each target task; determining a processing order of the plurality of target tasks based on the task type of each target task; controlling, according to the processing order of the plurality of target tasks, a target application corresponding to each target task to process the target task; and after processing of the plurality of target tasks is completed, controlling a system to be shut down. Before system shutdown, each target application is controlled, based on a processing type of each to-be-processed target task according to a specific order, to process a corresponding target task. This meets processing requirements of different types of target tasks before system shutdown, and improves flexibility of system shutdown.

## Description

This application claims priority to Chinese Patent Application No. 2023116567586, filed with the China National Intellectual Property Administration on December 5, 2023 and entitled "SYSTEM SHUTDOWN CONTROL METHOD AND APPARATUS, ELECTRONIC DEVICE, AND READABLE STORAGE MEDIUM", which is incorporated herein by reference in its entirety.

### TECHNICAL FIELD

This application relates to the field of terminal technologies, and in particular, to a system shutdown control method and apparatus, an electronic device, and a readable storage medium.

### BACKGROUND

A system shutdown procedure is a power management technology for mobile operating systems such as an iPhone operating system (iPhone operating system, iOS) and Android (Android). An Android operating system of an electronic device is used as an example. After detecting a shutdown operation triggered by a user, the operating system generally first prompts, through an asynchronous shutdown broadcast, an application that has subscribed to receive a shutdown broadcast to process a task before shutdown, and then shuts down an activity management service (activity management service, AMS), a package manager service (package manager service, PMS), a radios (radios) service, and a kernel system in a fixed order, to implement system shutdown.

The electronic device needs to process various types of tasks before shutdown, for example, system or application upgrade, document saving, and persistent data storage. When shutdown is performed according to an existing system shutdown method, only some applications can complete processing of corresponding tasks before system shutdown by listening to the shutdown broadcast, while other applications that cannot receive or listen to the broadcast stop running when a system service is shut down. As a result, some tasks cannot be processed before system shutdown.

### SUMMARY

This application provides a system shutdown control method and apparatus, an electronic device, and a readable storage medium, to resolve, to some extent, a technical problem that some types of to-be-processed tasks cannot be processed before shutdown due to an existing system shutdown method.

To achieve the foregoing objective, this application uses the following technical solutions.

According to a first aspect, this application provides a system shutdown control method. The method includes: in response to a shutdown operation, obtaining a plurality of target tasks to be processed before system shutdown and a task type of each target task; determining a processing order of the plurality of target tasks based on the task type of each target task; controlling, according to the processing order of the plurality of target tasks, a target application corresponding to each target task to process the target task; and after processing of the plurality of target tasks is completed, controlling a system to be shut down.

According to the system shutdown control method provided in this embodiment of this application, after a user triggers a shutdown operation on an electronic device, an operating system of the electronic device may obtain all target tasks to be processed before system shutdown, control, based on task types of different target tasks according to a specific processing order, target applications corresponding to the target tasks to complete processing of the target tasks before system shutdown, and then perform a subsequent system shutdown procedure. The control method can effectively avoid loss of data or damage to data of various target applications in a running state on the electronic device during system shutdown, meets processing requirements of different types of target tasks before system shutdown, and improves flexibility of the system shutdown method.

Optionally, a manner in which the operating system obtains the plurality of target tasks to be processed before system shutdown and the task type of each target task is as follows: When starting running, the target application corresponding to each target task may send, to the operating system, one or more target tasks that may need to be processed by the target application before system shutdown, and simultaneously send a task type of the target task.

For example, the target application may determine the task type of the corresponding target task based on an application type and/or a manner of processing the target task.

The shutdown operation may indicate to shut down the electronic device or reboot the electronic device. If the shutdown operation indicates to reboot the electronic device, after processing of the plurality of target tasks is completed, the subsequent system shutdown procedure includes but is not limited to shutting down various system services, shutting down a system kernel, restarting the system kernel, and restarting the various system services. If the shutdown operation indicates to shut down the electronic device, after processing of the plurality of target tasks is completed, the subsequent system shutdown procedure includes but is not limited to shutting down the various system services, shutting down the system kernel, and powering off all hardware in the electronic device.

The electronic device in the control method provided in this embodiment of this application is a device on which a mobile operating system such as Android, iOS, or HarmonyOS can be installed, such as a mobile phone, a tablet computer, or a wearable device.

In a possible implementation of the first aspect, the method further includes: obtaining a priority of each target task.

Determining the processing order of the plurality of target tasks based on the task type of each target task includes: sorting the plurality of target tasks according to a preset correspondence between a task type and a processing order, to obtain a first sorting result; adjusting, based on the priority of each target task, an order of target tasks of a same task type in the first sorting result, to obtain a second sorting result; and determining the processing order of the plurality of target tasks based on the second sorting result.

According to the possible implementation, when sending a corresponding target task to the operating system, each target application may further send a priority of the corresponding target task to the operating system. The operating system may determine, according to a descending order of priorities, a processing order of a plurality of target tasks of a same task type. For example, all tasks corresponding to all applications that can run on the electronic device may be classified into at least two priorities.

In a possible implementation of the first aspect, determining the processing order of the plurality of target tasks based on the second sorting result includes: obtaining a generation time of each target task; and adjusting, based on the generation time of each target task, an order of target tasks of a same task type that have a same priority in the second sorting result, to obtain the processing order of the plurality of target tasks.

According to the possible implementation, the generation time of the target task may be a time at which the operating system receives the target task sent by the target application corresponding to the target task to the operating system. The operating system may determine, according to a chronological order of generation times, a processing order of a plurality of target tasks of a same task type that have a same priority.

In a possible implementation of the first aspect, controlling, according to the processing order of the plurality of target tasks, the target application corresponding to each target task to process the target task includes: sequentially sending, according to the processing order of the plurality of target tasks, a system shutdown notification to the target application corresponding to each target task, where the system shutdown notification indicates the target application to process the corresponding target task.

In a possible implementation of the first aspect, the plurality of target tasks include a first task whose task type is shutdown takeover-capable, and a target application corresponding to the first task is a first application. Sequentially sending, according to the processing order of the plurality of target tasks, the system shutdown notification to the target application corresponding to each target task includes: sending the system shutdown notification to the first application; receiving a shutdown takeover notification sent by the first application, where the shutdown takeover notification indicates that the first application determines, based on the system shutdown notification, to continue to process the first task; suspending system shutdown based on the shutdown takeover notification; receiving a task completion notification sent by the first application; and sending, based on the task completion notification according to the processing order of the plurality of target tasks, the system shutdown notification to a target application corresponding to a next target task of the first task.

The shutdown takeover-capable first task is a task that has long processing duration and cannot be forcibly terminated during processing. After taking over system shutdown, the first application corresponding to the shutdown takeover-capable first task can completely autonomously determine task execution before system shutdown. For example, the shutdown takeover-capable first task may be upgrading the operating system, upgrading application software, or the like. Correspondingly, the first application may be an application such as system upgrade software or application market. The operating system can control, at a time, only one first application to process a corresponding first task.

In a possible implementation of the first aspect, the plurality of target tasks include a second task whose task type is interactive, and a target application corresponding to the second task is a second application. Sequentially sending, according to the processing order of the plurality of target tasks, the system shutdown notification to the target application corresponding to each target task includes: sending the system shutdown notification to the second application; receiving a task completion notification sent by the second application, where the task completion notification is sent after the second application detects, based on the system shutdown notification, that the second task exists and completes processing of the second task based on a trigger operation of a user in an interaction interface; and sending, based on the task completion notification according to the processing order of the plurality of target tasks, the system shutdown notification to a target application corresponding to a next target task of the second task.

The interactive second task is a task that needs interaction with the user, and the second application corresponding to the second task can process the second task only based on an interaction operation of the user. Therefore, if the plurality of obtained target tasks include a plurality of second tasks, the operating system needs to sequentially control, according to a processing order, second applications to synchronously process the corresponding second tasks. In other words, the operating system can control, at a time, only one second application to process a corresponding second task. This improves appropriateness of interaction with the user during system shutdown.

For example, the second task may be a task such as saving a document or an email that is not saved by the user. Correspondingly, the second application may be word processing software such as WPS Office or Microsoft Office, mailbox software, or the like.

In a possible implementation of the first aspect, the plurality of target tasks include a third task whose task type is non-interactive, and a target application corresponding to the third task is a third application. Controlling, according to the processing order of the plurality of target tasks, the target application corresponding to each target task to process the target task includes: simultaneously sending, at an interval of preset duration according to the processing order of the plurality of target tasks, a system shutdown notification to third applications corresponding to third tasks having a same priority, where the system shutdown notification indicates the third application to process the corresponding third task within the preset duration.

The third task is a lightweight task that does not need interaction with the user and has short processing duration. Therefore, the operating system may simultaneously control a plurality of third applications to asynchronously process corresponding third tasks, to improve task processing efficiency and shorten shutdown duration of the electronic device. If a third application does not complete processing of a corresponding third task within the preset duration, there is no need to process an uncompleted part of the third task.

For example, the third task may be a task such as persistent data storage.

According to a second aspect, this application provides a system shutdown control apparatus, including at least one unit configured to perform the method in any possible implementation of the first aspect.

According to a third aspect, this application provides an electronic device, including a processor. The processor is configured to run a computer program stored in a memory, to implement the method in any possible implementation of the first aspect.

According to a fourth aspect, this application provides a computer-readable storage medium. The computer-readable storage medium stores a computer program. When the computer program is executed by a processor, the method in any possible implementation of the first aspect is implemented.

According to a fifth aspect, this application provides a computer program product. When the computer program product is run on an electronic device, the electronic device is enabled to perform the method in any possible implementation of the first aspect.

For technical effects of the second aspect to the fifth aspect provided in this application, refer to the technical effects of the possible implementations of the first aspect. Details are not described herein again.

### BRIEF DESCRIPTION OF DRAWINGS

FIG. 1 is a schematic flowchart of shutdown of an existing operating system according to an embodiment of this application;
FIG. 2 is a diagram of a structure of an operating system of an electronic device according to an embodiment of this application;
FIG. 3 is a diagram of a structure of an electronic device according to an embodiment of this application;
FIG. 4 is a schematic flowchart of a system shutdown control method according to an embodiment of this application;
FIG. 5 is a diagram of a processing order of a plurality of target tasks according to an embodiment of this application;
FIG. 6 is a schematic flowchart 1 of controlling a target application to process a corresponding target task according to an embodiment of this application;
FIG. 7 is a schematic flowchart 2 of controlling a target application to process a corresponding target task according to an embodiment of this application;
FIG. 8 is a schematic flowchart 3 of controlling a target application to process a corresponding target task according to an embodiment of this application; and
FIG. 9 is a block diagram of a system shutdown control apparatus according to an embodiment of this application.

### DESCRIPTION OF EMBODIMENTS

The following describes technical solutions in embodiments of this application with reference to accompanying drawings and related embodiments in embodiments of this application. In descriptions of embodiments of this application, terms used in the following embodiments are merely intended to describe specific embodiments, but are not intended to limit this application. The singular forms "one", "the", "the foregoing", "this", and "the one" used in the specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in the specification indicates that one or more embodiments of this application include a specific feature, structure, or characteristic described with reference to the embodiments. Therefore, expressions such as "in an embodiment", "in some embodiments", "in some other embodiments", and "in other embodiments" that appear at different places in the specification do not necessarily mean referring to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified. "First" and "second" are merely intended for description, and shall not be understood as an indication or implication of relative importance or an implicit indication of a quantity of indicated technical features.

In embodiments of this application, the expression "example", "for example", or the like is used to give an example, an illustration, or a description. Any embodiment or design scheme described as an "example" or "for example" in embodiments of this application shall not be construed as being more preferred or more advantageous than another embodiment or design scheme. Exactly, use of the expression "example", "for example", or the like is intended to present a related concept in a specific manner.

Steps in methods provided in embodiments of this application are merely examples. Not all steps are mandatory, or not all content in information or messages is mandatory. A step or content may be added or reduced as required during use. A same step or steps or messages having a same function in embodiments of this application may be mutually referenced in different embodiments.

An iPhone operating system (iPhone operating system, iOS), Android (Android), and HarmonyOS (HarmonyOS) are several mobile operating systems commonly used in electronic devices. System shutdown is a power management technology for the mobile operating system. After a user shuts down or restarts the electronic device, the operating system needs to first shut down a running process in a user mode, and then shut down a system kernel, to implement system shutdown.

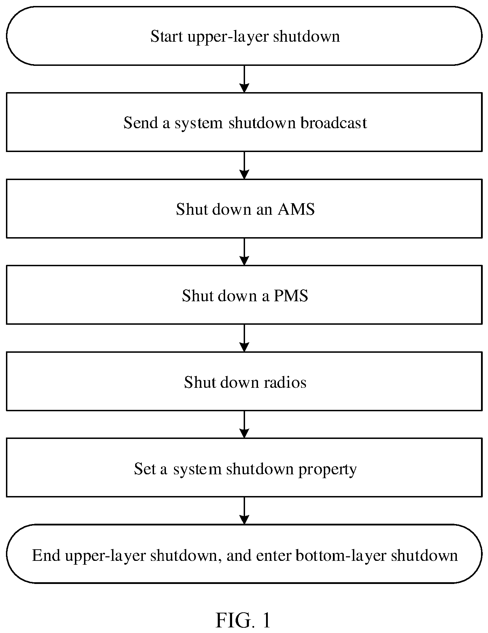

Specifically, FIG. 1 is a schematic flowchart of shutdown of an existing operating system. An Android system installed on an electronic device is used as an example. If a user triggers a shutdown operation on the electronic device, the operating system may publish a shutdown broadcast based on the shutdown operation, and an application that pre-registers to receive a shutdown broadcast may process a task before shutdown after listening to the shutdown broadcast. Then, various system services are shut down in a fixed order, specifically including an activity manager service (activity management service, AMS), a package manager service (package manager service, PMS), and a radios (radios) service. After an upper-layer shutdown procedure is completed, a power manager service (power manager service) is used to call a bottom layer, and a system property is set to "SystemProperties.set("sys.powerctl", "shutdown")" to enter bottom-layer shutdown, to shut down a system kernel. Finally, all hardware is powered off to shut down the electronic device.

Various applications run on the electronic device, and the applications need to execute corresponding tasks before system shutdown to avoid loss of application data, for example, save a document edited by the user and save configuration information of an application or a system. When shutdown is performed according to an existing system shutdown method, some applications can complete processing of corresponding tasks before system shutdown by listening to the shutdown broadcast, while other applications that cannot listen to the broadcast stop running when the operating system shuts down a system service. As a result, some tasks cannot be processed before system shutdown.

In addition, an existing system shutdown procedure is fixed and lacks extensibility and flexibility. If there is a new task to be processed before shutdown, a system developer needs to insert the new task to be processed before shutdown into the existing system shutdown procedure, which increases development difficulty for the system developer.

To resolve the foregoing problem, embodiments of this application provide a system shutdown control method and apparatus, an electronic device, and a readable storage medium. After a user triggers a shutdown operation on an electronic device, an operating system of the electronic device may first obtain all target tasks to be processed before system shutdown, determine a processing order of the target tasks based on task types of the target tasks, and then control target applications corresponding to the target tasks to process the respective target tasks. The control method can meet processing requirements of different types of target tasks before system shutdown, and improve flexibility of system shutdown.

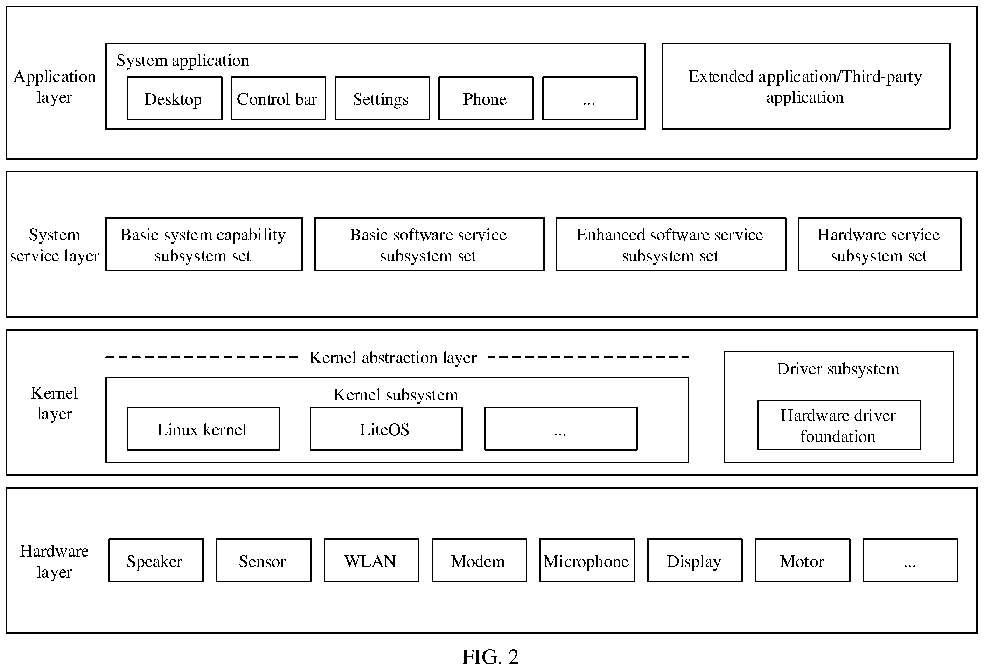

An operating system in the system shutdown control method provided in embodiments of this application may be a mobile operating system such as Android, iOS, or HarmonyOS. FIG. 2 is a diagram of a structure of an operating system of an electronic device according to an embodiment of this application.

In some embodiments, the operating system of the electronic device may be divided into four layers, including a hardware layer, a kernel layer, a system service layer, and an application layer. The layers communicate with each other through a software interface.

As shown in FIG. 2, the hardware layer includes physical components that provide a specific interaction response, for example, a speaker, a sensor, a WLAN, a modem, a microphone, a display, and a motor.

The kernel layer includes a kernel abstraction layer (kernel abstraction layer, KAL) and a driver subsystem. The KAL includes a plurality of kernels, such as a kernel of a Linux system, namely, a Linux kernel, and a kernel of a lightweight internet of things system, namely, LiteOS. The multi-kernel kernel layer may select, according to a system requirement, a corresponding kernel for processing. The driver subsystem may include a hardware driver foundation (hardware driver foundation, HDF), such as an audio driver, a wireless local area network (wireless local area network, WLAN) driver, and a modem driver. The hardware driver foundation can provide a unified peripheral access capability and a driver development and management framework.

The system service layer is a set of core capabilities of the operating system. The system service layer provides a service for an application through a framework layer. The layer may include a basic system capability subsystem set, a basic software service subsystem set, an enhanced software service subsystem set, and a hardware service subsystem set.

The basic system capability subsystem set provides basic capabilities for operations such as running, scheduling, and migration of a distributed application on devices with the operating system, and may include subsystems such as a distributed soft bus, distributed data management, distributed task scheduling, Ark multi-language runtime, a common base library, multimodal input, graphics, security, artificial intelligence (artificial intelligence, AI), and a user program framework. The Ark multi-language runtime provides C, C++, or JavaScript (JS) multi-language runtime and a basic system class library, and may further provide runtime for a Java program (namely, a part that is of an application or the framework layer and that is developed by using a Java language) that is staticized by using an Ark compiler.

The basic software service subsystem set provides the operating system with common universal software services, which may include a download service, a multimedia service, a power service, a telephone service, and the like.

The enhanced software service subsystem set provides the operating system with differentiated capability-enhanced software services for different devices, and may include subsystems such as a service dedicated to a smart screen, a service dedicated to a wearable, and a service dedicated to an internet of things (internet of things, IoT).

The hardware service subsystem set provides the operating system with hardware services, and may include subsystems such as a location service, biometric feature recognition, a hardware service dedicated to a wearable, and a hardware service dedicated to an IoT.

The application layer includes a system application and a third-party application (or referred to as an extended application). The system application may include applications that are installed on the electronic device by default, such as Desktop, Control bar, Settings, and Phone. The extended application may be an optional application developed and designed by a manufacturer of the electronic device, such as Electronic device manager, Phone clone, Notes, Weather, or Browser. A third-party non-system application may be an application that is developed by another manufacturer but can run in the operating system, such as Meeting, Game, Navigation, Social networking, Shopping, or Music.

Mutual hardware assistance and resource sharing may be implemented between a plurality of electronic devices running the operating system by using the distributed soft bus, distributed device virtualization, distributed data management, and distributed task scheduling.

An electronic device in the system shutdown control method provided in embodiments of this application is a device on which a mobile operating system such as Android, iOS, or HarmonyOS can be installed, such as a mobile phone, a tablet computer, or a wearable device. A specific type of the electronic device is not limited in embodiments of this application.

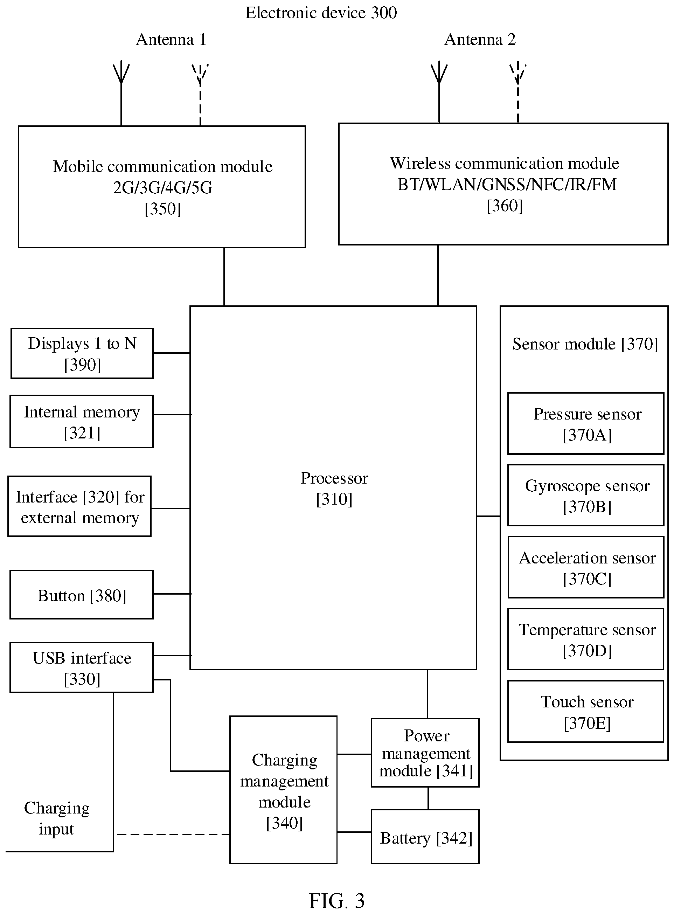

The following describes an electronic device in embodiments of this application. FIG. 3 is a diagram of a structure of an electronic device 300.

The electronic device 300 may include a processor 310, an interface 320 for external memory, an internal memory 321, a universal serial bus (universal serial bus, USB) interface 330, a charging management module 340, a power management module 341, a battery 342, an antenna 1, an antenna 2, a mobile communication module 350, a wireless communication module 360, a sensor module 370, a button 380, a display 390, and the like. The sensor module 370 may include a pressure sensor 370A, a gyroscope sensor 370B, an acceleration sensor 370C, a temperature sensor 370D, a touch sensor 370E, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, reduces waiting time of the processor 310, and therefore improves system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 310 may include a plurality of groups of I2C buses. The processor 310 may be separately coupled to the touch sensor 370E, a charger, and the like through different I2C bus interfaces. For example, the processor 310 may be coupled to the touch sensor 370E through the I2C interface, so that the processor 310 communicates with the touch sensor 370E through the I2C bus interface, to implement a touch function of the electronic device 300.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 310 to the wireless communication module 360. For example, the processor 310 communicates with a Bluetooth module in the wireless communication module 360 through the UART interface, to implement a Bluetooth function. The MIPI may be configured to connect the processor 310 to a peripheral component such as the display 390. The MIPI includes a camera serial interface (camera serial interface, CSI), a display serial interface (display serial interface, DSI), and the like. In some embodiments, the processor 310 communicates with the display 390 through the DSI, to implement a display function of the electronic device 300.

The GPIO interface may be configured by software. The GPIO interface may be configured as a control signal or a data signal. In some embodiments, the GPIO interface may be configured to connect the processor 310 to the display 390, the wireless communication module 360, the sensor module 370, or the like. The GPIO interface may alternatively be configured as an I2C interface, an I2S interface, a UART interface, an MIPI, or the like.

The USB interface 330 is an interface that conforms to a USB standard specification, and may be specifically a mini USB interface, a micro USB interface, a USB Type-C interface, or the like. The USB interface 330 may be configured to connect to a charger to charge the electronic device 300, or may be configured to transmit data between the electronic device 300 and a peripheral device, or may be configured to connect to a headset for playing audio through the headset. The interface may alternatively be configured to connect to another electronic device such as an AR device.

It can be understood that an interface connection relationship between modules illustrated in this embodiment of this application is merely an example for description, and does not constitute a limitation on the structure of the electronic device 300. In some other embodiments of this application, the electronic device 300 may alternatively use an interface connection manner different from that in the foregoing embodiment, or use a combination of a plurality of interface connection manners.

The charging management module 340 is configured to receive a charging input from a charger. The charger may be a wireless charger or a wired charger. In some embodiments of wired charging, the charging management module 340 may receive a charging input of the wired charger through the USB interface 330. In some embodiments of wireless charging, the charging management module 340 may receive a wireless charging input by using a wireless charging coil of the electronic device 300. When charging the battery 342, the charging management module 340 may further supply power to the electronic device by using the power management module 341.

The power management module 341 is configured to connect to the battery 342, the charging management module 340, and the processor 310. The power management module 341 receives an input from the battery 342 and/or the charging management module 340, and supplies power to the processor 310, the internal memory 321, the display 390, the wireless communication module 360, and the like. The power management module 341 may be further configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same component.

A wireless communication function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna of the electronic device 300 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 350 may provide a wireless communication solution that is applied to the electronic device 300 and that includes 2G/3G/4G/5G or the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules of the mobile communication module 350 may be disposed in the processor 310. In some embodiments, at least some functional modules of the mobile communication module 350 may be disposed in a same component as at least some modules of the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor displays an image or a video through the display 390. In some embodiments, the modem processor may be an independent component. In some other embodiments, the modem processor may be independent of the processor 310, and is disposed in a same component as the mobile communication module 350 or another functional module.

The wireless communication module 360 may provide a wireless communication solution that is applied to the electronic device 300 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 360 may be one or more components integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, in the electronic device 300, the antenna 1 is coupled to the mobile communication module 350, and the antenna 2 is coupled to the wireless communication module 360, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 300 implements a display function through the GPU, the display 390, the application processor, and the like. The GPU is a microprocessor for image processing, and is connected to the display 390 and the application processor. The GPU is configured to: perform mathematical and geometric computation, and render an image. The processor 310 may include one or more GPUs that execute program instructions to generate or change display information.

The display 390 is configured to display an image, a video, or the like. The display 390 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 300 may include one or N displays 390, where N is a positive integer greater than 1.

The digital signal processor is configured to process a digital signal, and may process another digital signal in addition to a digital image signal. For example, when the electronic device 300 selects a frequency, the digital signal processor is configured to perform Fourier transform and the like on frequency energy.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a mode of transfer between human brain neurons, and may further continuously perform self-learning. Applications such as intelligent cognition of the electronic device 300 may be implemented through the NPU, for example, image recognition, facial recognition, voice recognition, and text understanding.

The interface 320 for external memory may be configured to connect to an external storage card, for example, a micro SD card, to extend a storage capability of the electronic device 300. The external storage card communicates with the processor 310 through the interface 320 for external memory, to implement a data storage function. For example, a file such as a video is stored in the external storage card.

The internal memory 321 may be configured to store computer-executable program code. The executable program code includes instructions. The internal memory 321 may include a program storage area and a data storage area. The program storage area may store an operating system, an application required by at least one function (for example, an image playing function), and the like. The data storage area may store data (for example, a phone book) created during use of the electronic device 300, and the like. In addition, the internal memory 321 may include a highspeed random access memory, or may include a nonvolatile memory, for example, at least one magnetic disk storage device, a flash storage device, or a universal flash storage (universal flash storage, UFS). The processor 310 runs instructions stored in the internal memory 321 and/or instructions stored in the memory disposed in the processor, to perform various function applications and data processing of the electronic device 300.

The pressure sensor 370A is configured to sense a pressure signal, and may convert the pressure signal into an electrical signal. In some embodiments, the pressure sensor 370A may be disposed on the display 390. There are a plurality of types of pressure sensors 370A, such as a resistive pressure sensor, an inductive pressure sensor, and a capacitive pressure sensor. The capacitive pressure sensor may include at least two parallel plates made of conductive materials. When a force is applied to the pressure sensor 370A, capacitance between electrodes changes. The electronic device 300 determines pressure intensity based on the change in the capacitance. When a touch operation is performed on the display 390, the electronic device 300 detects intensity of the touch operation through the pressure sensor 370A. The electronic device 300 may also calculate a touch location based on a detection signal of the pressure sensor 370A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 370B may be configured to determine a motion posture of the electronic device 300. In some embodiments, an angular velocity of the electronic device 300 around three axes (namely, axes x, y, and z) may be determined through the gyroscope sensor 370B. The gyroscope sensor 370B may be used in a navigation scenario and a motion-sensing game scenario.

The acceleration sensor 370C may detect accelerations in various directions (usually on three axes) of the electronic device 300. When the electronic device 300 is still, a magnitude and a direction of gravity may be detected. The acceleration sensor may be further configured to identify a posture of the electronic device, and is used in an application such as switching between a landscape mode and a portrait mode or a pedometer.

The temperature sensor 370D is configured to detect a temperature. In some embodiments, the electronic device 300 executes a temperature processing strategy based on the temperature detected by the temperature sensor 370D. For example, when the temperature reported by the temperature sensor 370D exceeds a threshold, the electronic device 300 lowers performance of a processor near the temperature sensor 370D, to reduce power consumption for thermal protection. In some other embodiments, when the temperature is less than another threshold, the electronic device 300 heats the battery 342, to prevent the electronic device 300 from being shut down abnormally due to a low temperature. In some other embodiments, when the temperature is less than still another threshold, the electronic device 300 boosts an output voltage of the battery 342, to avoid abnormal shutdown caused by a low temperature.

The touch sensor 370E is also referred to as a "touch component". The touch sensor 370E may be disposed on the display 390, and the touch sensor 370E and the display 390 constitute a touchscreen, which is also referred to as a "touch screen". The touch sensor 370E is configured to detect a touch operation performed on or near the touch sensor. The touch sensor may transfer the detected touch operation to the application processor to determine a type of the touch event. A visual output related to the touch operation may be provided through the display 390. In some other embodiments, the touch sensor 370E may alternatively be disposed on a surface of the electronic device 300 at a location different from that of the display 390.

The button 380 includes a power button, a volume button, and the like. The button 380 may be a mechanical button or a touch button. The electronic device 300 may receive a button input, and generate a button signal input related to a user setting and function control of the electronic device 300.

It may be understood that the structure shown in this embodiment of this application does not constitute a specific limitation on the electronic device 300. In some other embodiments of this application, the electronic device 300 may include more or fewer components than those shown in the figure, or some components may be combined, or some components may be split, or different component arrangements may be used. The components shown in the figure may be implemented by hardware, software, or a combination of software and hardware.

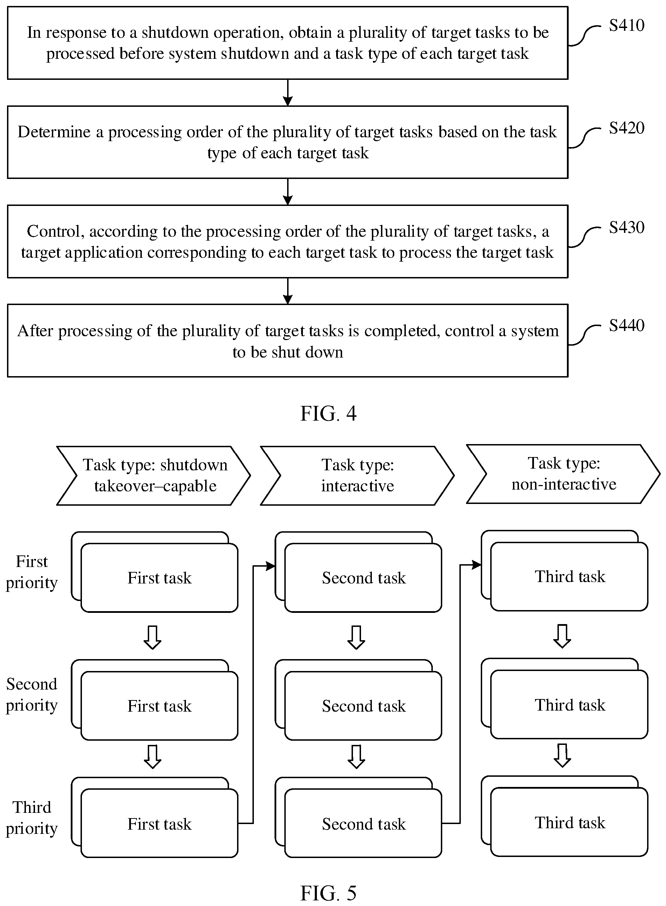

The following describes a system shutdown control method provided in an embodiment of this application. FIG. 4 is a schematic flowchart of a system shutdown control method according to an embodiment of this application. The method may be applied to the foregoing electronic device on which a mobile operating system is installed. The method includes step S410 to step S440. The steps are described below in detail.

S410: In response to a shutdown operation, obtain a plurality of target tasks to be processed before system shutdown and a task type of each target task.

In this embodiment of this application, a triggering condition for the shutdown operation may be automatic shutdown of the electronic device due to low battery, forced shutdown of the electronic device by a user, automatic shutdown of the electronic device at a preset moment, shutdown due to a reboot of the electronic device, or the like. For example, during forced shutdown by the user, the user may trigger a single mechanical button on the electronic device (for example, press a power button for preset duration) or trigger a plurality of mechanical buttons on the electronic device (for example, simultaneously press a power button and a volume button for preset duration), and trigger a shutdown button in prompt information displayed on a display of the electronic device, to trigger the shutdown operation on the electronic device.

It should be noted that, after the user triggers the shutdown operation on the electronic device, the operating system of the electronic device may obtain one target task to be processed before system shutdown, or may obtain a plurality of target tasks to be processed before system shutdown. The plurality of target tasks obtained by the operating system may include a plurality of tasks to be processed before system shutdown by one target application running on the electronic device, and/or a plurality of different tasks to be processed before system shutdown by a plurality of different target applications running on the electronic device.

For example, the target application may be system-provided software installed on the electronic device, for example, operating system software, language processing system software, database management system software, or Notepad, or the target application may be third-party software installed on the electronic device, for example, word processing software such as WPS Office or Microsoft Office, or mailbox software.

In this application, application software installed on the electronic device may communicate with the operating system of the electronic device through a software development kit (SDK, software development kit) interface. The SDK is developed based on the operating system of the electronic device, and is specifically a set of development tools for a software engineer to create application software for a specific software package, software framework, hardware platform, operating system, and the like. The SDK may be some simple files that provide an application programming interface for a programming language, but may also include complex hardware that can communicate with an embedded system.

After the target application installed on the electronic device starts running, the target application may actively send, to the operating system through the SDK interface, one or more target tasks to be processed by the target application before system shutdown and a task type of each target task, so that the operating system controls, after detecting that the user triggers the shutdown operation, each target application to process a corresponding target task before system shutdown.

For example, the target task may be a system upgrade task of the operating system software, a persistent data storage task of the database management system software, a document saving task of the word processing software, or the like.

In an embodiment, a task type of a to-be-processed task is related to a function of a corresponding application and a task processing manner. Based on the application corresponding to the to-be-processed task and the task processing manner, the plurality of target tasks to be processed before system shutdown may be classified into three types. Specifically, a first type of target tasks may include one or more first tasks whose task types are shutdown takeover-capable, a second type of target tasks may include one or more second tasks whose task types are interactive, and a third type of target tasks may include one or more third tasks whose task types are non-interactive.

The shutdown takeover-capable first task is a task that has long processing duration and cannot be forcibly terminated during processing, and a target application corresponding to the first task is a first application. For example, the first application may be an application such as system upgrade software or application market. Correspondingly, the first task may be upgrading the operating system, upgrading application software, or the like. If the first task is forcibly terminated during upgrade of the operating system or the application software, the operating system and the application may be damaged.

The interactive second task is a task that needs interaction with the user, and a target application corresponding to the second task is a second application. The second application can process the corresponding second task only according to an interaction instruction of the user. The operating system may sequentially control second applications to synchronously process corresponding second tasks. For example, the second application may be word processing software such as WPS Office or Microsoft Office, mailbox software, or the like. Correspondingly, the second task may be a task such as saving a document that is not saved by the user, or saving an email that is not saved by the user.

The non-interactive third task is a lightweight task that does not need interaction with the user and has short processing duration, and a target application corresponding to the third task is a third application. The operating system may simultaneously control a plurality of third applications to asynchronously process corresponding third tasks. For example, the third application may be data persistence service software or the like. Correspondingly, the third task may be persistent data storage or the like.

It should be noted that a classification manner of the task types of the target tasks and a quantity of task types in this embodiment of this application are merely examples, and do not constitute a specific limitation on different task types of the target tasks. The task types of the target tasks may be classified in another classification manner.

S420: Determine a processing order of the plurality of target tasks based on the task type of each target task.

In an embodiment, if the task types of the plurality of target tasks obtained by the operating system of the electronic device are all different, all the target tasks may be sorted according to a preset correspondence between a task type and a processing order, to obtain the processing order of the plurality of target tasks.

For example, the target tasks may be processed in a preset processing order of the shutdown takeover-capable task type, the interactive task type, and the non-interactive task type.

In another embodiment, if the plurality of target tasks obtained by the operating system of the electronic device include a plurality of target tasks of a same task type, the operating system may further obtain a priority of each target task, to further sort a processing order of the plurality of target tasks of the same task type based on priorities of the target tasks.

Specifically, the operating system of the electronic device may sort the plurality of obtained target tasks according to the preset correspondence between a task type of a task and a processing order, to obtain a first sorting result; adjust, based on the priority of each target task, an order of target tasks of a same task type in the first sorting result, to obtain a second sorting result; and determine the processing order of the plurality of target tasks based on the second sorting result.

There are at least two priorities for the target tasks. When the task types of the plurality of target tasks are the same, the operating system may prioritize controlling a target application corresponding to a target task having a higher priority to process the target task. In an example, a priority of a target task may be determined by the operating system based on a type of a target application corresponding to the target task. For example, the type of the target application corresponding to the target task is third-party software installed on the electronic device or system-provided software. Correspondingly, there may be two priorities for the target tasks, and a priority of a target task corresponding to system-provided software is higher than a priority of a target task corresponding to a third-party application.

In another example, when sending a corresponding target task to the operating system, each target application may further send a priority of the corresponding target task to the operating system. For example, there may be three priorities for the target tasks, and the three priorities are a first priority, a second priority, and a third priority in a descending order.

As an example instead of a limitation, it is assumed that the plurality of target tasks obtained by the operating system include a plurality of first tasks whose task types are shutdown takeover-capable, a plurality of second tasks whose task types are interactive, and a plurality of third tasks whose task types are non-interactive, and the target task of each task type includes at least one target task having the first priority, at least one target task having the second priority, and at least one target task having the third priority. In this case, the processing order of the plurality of target tasks obtained by the operating system may be shown in FIG. 5. Refer to FIG. 5. The processing order of the plurality of target tasks is as follows: a first task whose task type is shutdown takeover-capable and that has the first priority, a first task whose task type is shutdown takeover-capable and that has the second priority, a first task whose task type is shutdown takeover-capable and that has the third priority, a second task whose task type is interactive and that has the first priority, a second task whose task type is interactive and that has the second priority, a second task whose task type is interactive and that has the third priority, a third task whose task type is non-interactive and that has the first priority, a third task whose task type is non-interactive and that has the second priority, and a third task whose task type is non-interactive and that has the third priority.

It should be noted that a specific quantity of priorities of the tasks is not specifically limited in embodiments of this application. In another embodiment of this application, the quantity of priorities of the target tasks may be greater than three.

Further, in another embodiment, if there are at least two target tasks of a same task type that have a same priority in all the target tasks obtained by the operating system, the operating system may further obtain a generation time of each target task, and adjust, based on the generation time of each target task, an order of a plurality of target tasks of a same task type that have a same priority in the second sorting result, to further determine the processing order of all the target tasks.

The generation time of the target task may be a specific receiving moment at which the operating system receives the corresponding target task sent by a target application. When there are a plurality of target tasks of a same task type that have a same priority, the operating system may determine, according to a chronological order of generation times, a processing order of the plurality of target tasks of the same task type that have the same priority in all the obtained target tasks, to prioritize controlling a target application corresponding to a target task with an earlier generation time to process the target task.

Optionally, if there are at least two target tasks that have a same task type, priority, and generation time in all the target tasks obtained by the operating system, the operating system may randomly sort the at least two target tasks that have the same priority, task type, and generation time in the second sorting result.

S430: Control, according to the processing order of the plurality of target tasks, a target application corresponding to each target task to process the target task.

In this step, manners in which the operating system controls a target application corresponding to a target task of each task type to process the target task are all different. Specifically, for at least one first task whose task type is shutdown takeover-capable in the plurality of target tasks obtained by the operating system, a first application corresponding to the first task may be controlled, in Manner 1, to process the first task. For at least one second task whose task type is interactive in the plurality of target tasks obtained by the operating system, a second application corresponding to the second task may be controlled, in Manner 2, to process the second task. For at least one third task whose task type is non-interactive in the plurality of target tasks obtained by the operating system, a third application corresponding to the third task may be controlled, in Manner 3, to process the third task.

With reference to corresponding flowcharts, the following specifically describes a process in which the operating system controls, in different implementations, target applications corresponding to target tasks of different task types to process the target tasks.

### Manner 1

For one or more first tasks whose task types are shutdown takeover-capable in the plurality of target tasks obtained by the operating system, the operating system may sequentially send, according to a processing order of the first tasks, a system shutdown notification to a first application corresponding to each first task. The system shutdown notification may indicate the first application to process the corresponding first task.

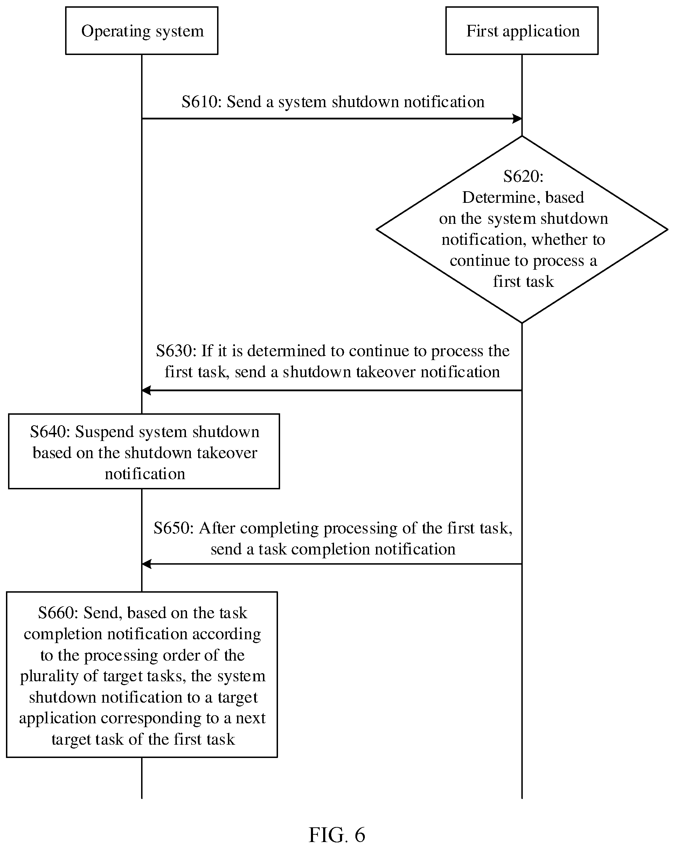

In an implementation, FIG. 6 is a schematic flowchart 1 of controlling a target application to process a corresponding target task. The operating system may control, through steps in FIG. 6, any first application to process the corresponding first task. The following describes each step in detail.

S610: The operating system sends the system shutdown notification to the first application.

S620: The first application determines, based on the system shutdown notification, whether to continue to process the first task.

It should be noted that, after the first application installed on the electronic device starts running, the first application may send the first task to be processed before system shutdown to the operating system. Therefore, there may be a case in which the first application already completes processing of the first task when the user triggers the shutdown operation on the electronic device, or there may be a case in which the first application does not complete processing of the first task when the user triggers the shutdown operation on the electronic device. Therefore, after receiving the system shutdown notification sent by the operating system, the first application needs to determine whether processing of the first task is completed and whether processing of the first task needs to be continued if processing is not completed.

S630: If the first application determines to continue to process the first task, the first application sends a shutdown takeover notification to the operating system.

If the first application does not complete processing of the first task when the user triggers the shutdown operation on the electronic device, the first application may determine, based on the system shutdown notification, that processing of the first task needs to be continued. Correspondingly, after determining that processing of the first task needs to be continued, the first application may send the shutdown takeover notification to the operating system, and continue to process the first task. The shutdown takeover notification may indicate that the first application needs to continue to process the first task and take over system shutdown.

S640: The operating system suspends system shutdown based on the shutdown takeover notification.

In another implementation, after suspending system shutdown, the operating system needs to restart the system shutdown procedure after the first application completes processing of the corresponding first task, to control another target application to process a corresponding target task. Therefore, after step S640, the method for the operating system to control the first application to process the corresponding first task further includes step S650 and step S660.

S650: After completing processing of the first task, the first application sends a task completion notification to the operating system.

S660: The operating system sends, based on the task completion notification according to the processing order of the plurality of target tasks, the system shutdown notification to a target application corresponding to a next target task of the first task.

According to the processing order of all the target tasks obtained by the operating system, the next target task of the first task may be a next first task whose generation time is the same as a generation time of the currently processed first task and that has a same priority, a next first task whose generation time is later than the generation time of the currently processed first task and that has the same priority, a first task having a next priority, a second task, or a third task.

It may be understood that, in Manner 1, if the first application already completes processing of the first task when the user triggers the shutdown operation on the electronic device, the first application may determine, based on the system shutdown notification, that there is no need to continue to process the first task. In this case, the first application may send a non-takeover notification to the operating system. The non-takeover notification may indicate that the first application does not continue to process the first task and does not take over system shutdown. After receiving the non-takeover notification, the operating system may send, according to the processing order of the plurality of target tasks determined in the foregoing embodiment, the system shutdown notification to the target application corresponding to the next target task of the first task, to indicate the target application corresponding to the next target task to process the target task.

### Manner 2

For one or more second tasks whose task types are interactive in the plurality of target tasks obtained by the operating system, the operating system may perform synchronous processing on the second tasks according to a processing order of the second tasks. Specifically, the operating system may sequentially send a system shutdown notification to a second application corresponding to each second task. The system shutdown notification may indicate the second application to process the corresponding first task.

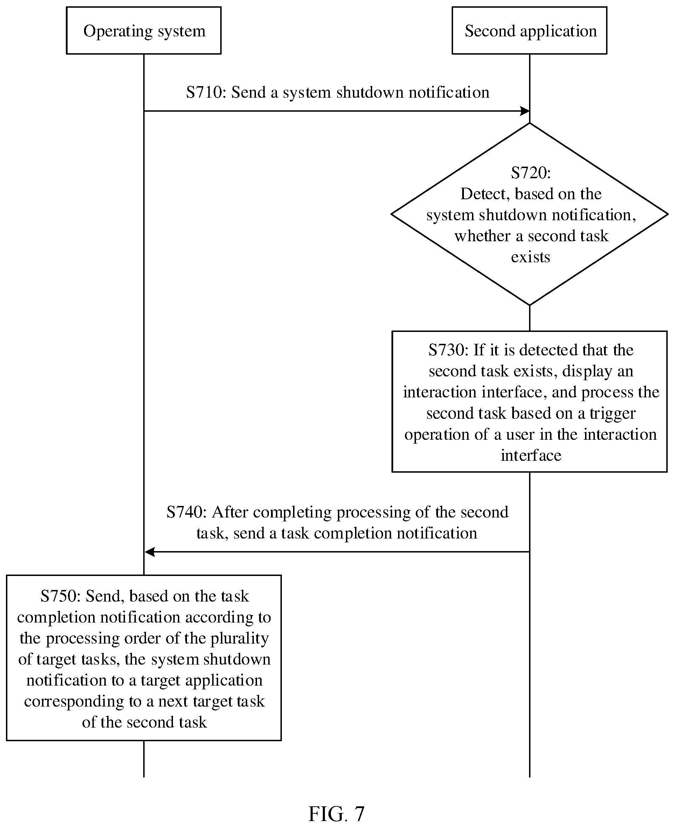

In an implementation, FIG. 7 is a schematic flowchart 2 of controlling a target application to process a corresponding target task. The operating system may control, through steps in FIG. 7, any second application to process the corresponding second task. The following describes each step in detail.

S710: The operating system sends the system shutdown notification to the second application.

S720: The second application detects, based on the system shutdown notification, whether the second task exists.

It should be noted that the second task is a task that needs to be processed by the second application according to an interaction instruction of the user, and after the second application installed on the electronic device starts running, the second application may send the second task that may need to be processed before system shutdown to the operating system. Therefore, there may be a case in which the second application already completes processing of the corresponding second task according to the interaction instruction of the user when the user triggers the shutdown operation on the electronic device, or there may be a case in which the second application does not detect the interaction instruction of the user and does not process the second task when the user triggers the shutdown operation on the electronic device. Therefore, after receiving the system shutdown notification sent by the operating system, the second application may first detect whether the to-be-processed second task exists currently.

S730: If the second application detects that the second task exists, the second application displays an interaction interface, and processes the second task based on a trigger operation of the user in the interaction interface.

Specifically, if the second application detects, based on the system shutdown notification, that the to-be-processed second task exists, the second application may display the interaction interface in a display interface of the electronic device, and process the second task in a processing manner indicated by the trigger operation of the user in the interaction interface.

As an example instead of a limitation, it is assumed that the second task is saving a Word document that is not saved by the user, and the second application is WPS Office. If WPS Office detects, after receiving the system shutdown notification sent by the operating system, that a first Word document in an editing state is not saved, WPS Office displays an interaction interface in a display interface of the electronic device, and the interaction interface displays prompt information "Do you want to save changes to the first Word document?", a "Yes" button, and a "No" button. If the user triggers the "Yes" button, the second application may save the first Word document to a preset storage space. If the user triggers the "No" button, the second application does not save the first Word document.

It should be noted that, if the second application does not detect the trigger operation of the user in the interaction interface, the second application cannot process the corresponding second task, which blocks the system shutdown procedure of the operating system. The operating system can continue to execute a next target task only after the second application detects the trigger operation of the user and completes processing of the second task.

In another implementation, the operating system needs to continue to perform the system shutdown procedure after the second application completes processing of the corresponding second task. Therefore, after step S730, the method for the operating system to control the second application to process the corresponding second task further includes step S740 and step S750.

S740: After completing processing of the second task, the second application sends a task completion notification to the operating system.

S750: The operating system sends, based on the task completion notification according to the processing order of the plurality of target tasks, the system shutdown notification to a target application corresponding to a next target task of the second task.

The next target task of the second task may be a next second task whose generation time is the same as a generation time of the currently processed second task and that has a same priority, a next second task whose generation time is later than the generation time of the currently processed second task and that has the same priority, a second task having a next priority, or a third task.

It may be understood that, in Manner 2, if the second application detects, based on the system shutdown notification, that no second task needs to be processed, the second application may send, to the operating system, a notification indicating the operating system to continue to perform the system shutdown procedure, so that the operating system sends, according to the processing order of the plurality of target tasks, the system shutdown notification to the target application corresponding to the next target task of the second task.

### Manner 3

The non-interactive third task is a lightweight task that does not need interaction with the user and has short processing duration. Therefore, the operating system may simultaneously control a plurality of third applications to asynchronously process corresponding third tasks, to improve task processing efficiency and shorten shutdown duration of the electronic device.

In an implementation, the operating system may simultaneously send, at an interval of preset duration according to the processing order of the plurality of target tasks, a system shutdown notification to third applications corresponding to third tasks having a same priority. The system shutdown notification indicates the third application to process the corresponding third task within the preset duration. To improve task processing efficiency, the preset duration shall not be excessively long. For example, the preset duration may be 30 seconds.

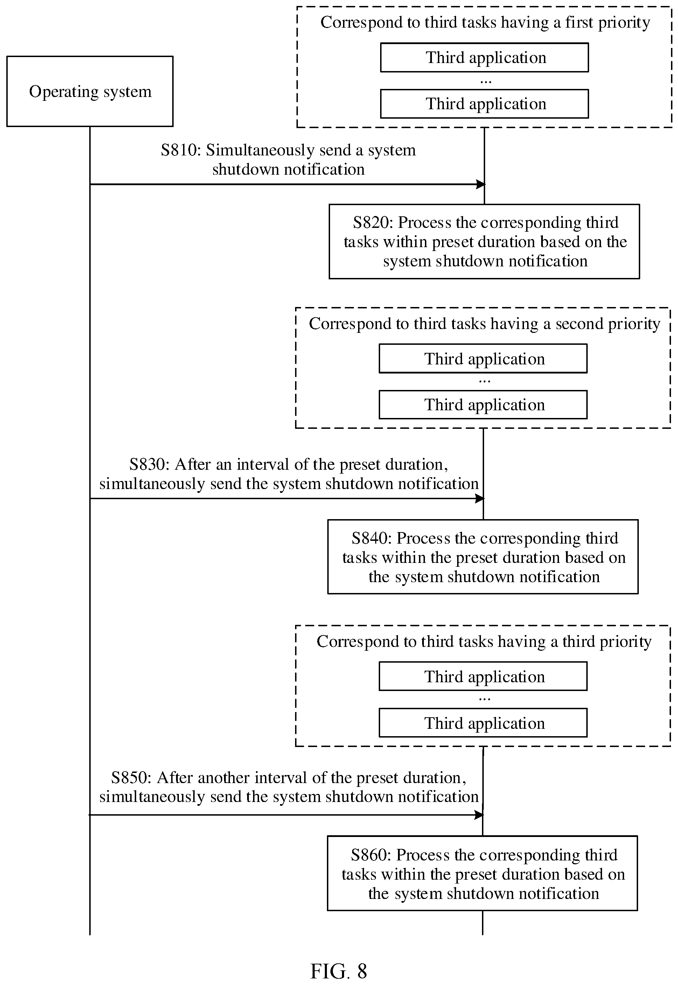

As an example instead of a limitation, FIG. 8 is a schematic flowchart 3 of controlling a target application to process a corresponding target task. It is assumed that the plurality of target tasks obtained by the operating system include a plurality of third tasks whose task types are non-interactive, and the plurality of third tasks include at least one third task having the first priority, at least one third task having the second priority, and at least one third task having the third priority (FIG. 8 shows only a plurality of third applications corresponding to the third tasks having the priorities). The operating system may determine, based on the priorities of the target tasks, that a processing order of the third tasks is as follows: all third tasks having the first priority, all third tasks having the second priority, and all third tasks having the third priority in the plurality of obtained target tasks.

Based on this, the operating system may control, according to the processing order through step S810 to step S860 in FIG. 8, third applications corresponding to all third tasks in the plurality of obtained target tasks to process the corresponding third tasks. The steps are specifically as follows.

S810: The operating system simultaneously sends the system shutdown notification to third applications corresponding to all the third tasks having the first priority.

S820: The third applications corresponding to the third tasks having the first priority process the corresponding third tasks within the preset duration based on the system shutdown notification.

S830: After an interval of the preset duration, the operating system simultaneously sends the system shutdown notification to third applications corresponding to all the third tasks having the second priority.

The interval of the preset duration is a time interval between a current moment and a moment at which the system shutdown notification is sent to the third applications corresponding to the third tasks having the first priority.

S840: The third applications corresponding to the third tasks having the second priority process the corresponding third tasks within the preset duration based on the system shutdown notification.

S850: After another interval of the preset duration, the operating system simultaneously sends the system shutdown notification to third applications corresponding to all the third tasks having the third priority.

The another interval of the preset duration is a time interval between a current moment and a moment at which the system shutdown notification is sent to the third applications corresponding to the third tasks having the second priority.

S860: The third applications corresponding to the third tasks having the third priority process the corresponding third tasks within the preset duration based on the system shutdown notification.

It should be noted that in a process in which the operating system controls the third application to process the corresponding third task, the third application does not need to send a task completion notification to the operating system, and each third application may asynchronously process a corresponding third task in an independently running thread. If a third application does not complete processing of a corresponding third task within the preset duration, the uncompleted third task may be discarded (that is, a corresponding thread stops running). After the preset duration from a moment of previous sending of the system shutdown notification to the third application, the operating system simultaneously sends, according to the processing order of the target tasks determined in the foregoing embodiment, the system shutdown notification to third applications corresponding to all third tasks having a next priority, until all third applications are controlled to complete processing of corresponding third tasks.

According to the foregoing three different manners, after the operating system obtains all target tasks to be processed before system shutdown, and determines a processing order of all the target tasks based on task types, priorities, and generation times of the tasks, the operating system may control, before system shutdown according to the determined processing order in different processing manners, corresponding target applications to process target tasks of different task types. The foregoing control method can meet processing requirements of tasks of different task types to be processed before system shutdown, and improve flexibility of processing target tasks of different task types before system shutdown.

In addition, it should be noted that, in the method provided in embodiments of this application, the plurality of target tasks obtained by the operating system may include tasks of one task type or a plurality of different task types, tasks of each task type may include tasks having one priority or a plurality of different priorities, and tasks having a same priority may include tasks with one generation time or a plurality of different generation times. In other words, the plurality of target tasks obtained by the operating system may not completely include tasks of all task types and tasks having all priorities. In this case, the operating system does not need to process, completely according to the fixed processing procedure shown in FIG. 5, tasks including all task types, all priorities, and all generation times before system shutdown.

For example, it is assumed that the plurality of target tasks obtained by the operating system include a second task 1 and a second task 2 that have the first priority and whose task types are interactive, a third task 1 and a third task 2 that have the first priority and whose task types are non-interactive, and a third task 3 that has the second priority and whose task type is non-interactive, where a generation time of the first task 1 is earlier than a generation time of the second task 2. Based on this, the operating system may determine, based on the task types and the priorities of the plurality of target tasks, that a processing order of the plurality of target tasks is as follows: the second task 1, the second task 2, the third task 1 and the third task 2 to be processed simultaneously, and the third task 3.

For both the second task 1 and the second task 2, the method in step S710 to step S750 in Manner 2 may be used to sequentially control corresponding second applications to process the two tasks. After processing of the second task 3 is completed, the operating system may simultaneously send the system shutdown notification to a third application 1 corresponding to the third task 1 and a third application 2 corresponding to the third task 2, to indicate the third application 1 and the third application 2 to respectively process the third task 1 and the third task 2 within the preset duration. After an interval of the preset duration, the operating system may send the system shutdown notification to a third application 3 corresponding to the third task 3, to indicate the third application 3 to process the third task 3 within the preset duration.

S440: After processing of the plurality of target tasks is completed, control a system to be shut down.

In an embodiment, if a last processed target task in the plurality of target tasks obtained by the operating system is a shutdown takeover-capable first task or an interactive second task, after obtaining a task completion notification sent by a target application corresponding to the last processed target task, the operating system may consider that processing of all the target tasks is completed.

In another embodiment, if a last processed target task in the plurality of target tasks obtained by the operating system is a non-interactive third task, after the preset duration from a moment of last sending of the system shutdown notification to a third application corresponding to a third task, the operating system may consider that processing of all the target tasks is completed.

After determining that processing of all the obtained target tasks is completed, the operating system may perform a subsequent system shutdown procedure based on shutdown operation triggered by the user on the electronic device. For example, if the shutdown operation indicates to reboot the electronic device, the subsequent system shutdown procedure may include shutting down various system services, shutting down a system kernel, restarting the system kernel, and restarting the various system services. The various system services include but are not limited to an activity management service, a package manager service, a radios service, and the like. If the shutdown operation indicates to shut down the electronic device, the subsequent system shutdown procedure may include shutting down the various system services, shutting down the system kernel, and powering off all hardware in the electronic device.

According to the system shutdown control method provided in the foregoing embodiments of this application, for all target tasks that are of different task types and application scenarios and that are to be processed before system shutdown, three different processing manners, namely, shutdown takeover processing, synchronous processing, and asynchronous processing, are set for the target tasks of different task types. In this case, before system shutdown, the operating system may first determine a processing order of all the target tasks based on task types, priorities, and generation times of the target tasks, then control, according to the processing order in a processing manner corresponding to the task type of each target task, target applications to process corresponding target tasks, and then perform a subsequent system shutdown procedure. This can effectively avoid loss of application data and system data or damage to application data and system data. The control method meets processing requirements of different types of tasks to be processed before shutdown, and improves flexibility of system shutdown.

The foregoing describes the method embodiments provided in this application, and the following describes an apparatus embodiment provided in this application. It should be understood that descriptions of the apparatus embodiment correspond to descriptions of the method embodiments. Therefore, for content that is not described in detail, refer to the foregoing method embodiments. For brevity, details are not described herein again.

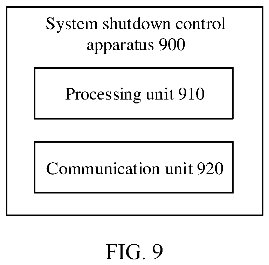

FIG. 9 is a block diagram of a system shutdown control apparatus according to an embodiment of this application. As shown in FIG. 9, the system shutdown control apparatus 900 may include a processing unit 910 and a communication unit 920. The communication unit 920 may implement a corresponding communication function. The communication may be internal communication of the system shutdown control apparatus 900, or may be communication between the system shutdown control apparatus 900 and another apparatus. The processing unit 910 may implement a corresponding processing function. The communication unit 920 may also be referred to as a communication interface or a transceiver unit. Optionally, the system shutdown control apparatus 900 may further include a storage unit. The storage unit may be configured to store instructions and/or data. The processing unit 910 may read the instructions and/or the data in the storage unit, to enable the apparatus to implement the foregoing method embodiments.

In a possible design, the system shutdown control apparatus 900 may be a module or a chip used in an electronic device. The system shutdown control apparatus 900 may be configured to perform steps or procedures performed by the electronic device in the foregoing method embodiments.

Specifically, the communication unit 920 is configured to: in response to a shutdown operation, obtain a plurality of target tasks to be processed before system shutdown and a task type of each target task. The processing unit 910 is configured to: determine a processing order of the plurality of target tasks based on the task type of each target task; control, according to the processing order of the plurality of target tasks, a target application corresponding to each target task to process the target task; and after processing of the plurality of target tasks is completed, control a system to be shut down.

Optionally, the communication unit 920 is further configured to obtain a priority of each target task. The processing unit 910 is further configured to: sort the plurality of target tasks according to a preset correspondence between a task type and a processing order, to obtain a first sorting result; adjust, based on the priority of each target task, an order of target tasks of a same task type in the first sorting result, to obtain a second sorting result; and determine the processing order of the plurality of target tasks based on the second sorting result.

Optionally, the communication unit 920 is further configured to obtain a generation time of each target task. The processing unit 910 is further configured to adjust, based on the generation time of each target task, an order of target tasks of a same task type that have a same priority in the second sorting result, to obtain the processing order of the plurality of target tasks.

Optionally, the communication unit 920 is further specifically configured to sequentially send, according to the processing order of the plurality of target tasks, a system shutdown notification to the target application corresponding to each target task, where the system shutdown notification indicates the target application to process the corresponding target task.

Optionally, the plurality of target tasks include a first task whose task type is shutdown takeover-capable, and a target application corresponding to the first task is a first application. The communication unit 920 is further specifically configured to: send the system shutdown notification to the first application; and receive a shutdown takeover notification sent by the first application, where the shutdown takeover notification indicates that the first application determines, based on the system shutdown notification, to continue to process the first task. The processing unit 910 is further configured to suspend system shutdown based on the shutdown takeover notification. The communication unit 920 is further configured to: receive a task completion notification sent by the first application; and send, based on the task completion notification according to the processing order of the plurality of target tasks, the system shutdown notification to a target application corresponding to a next target task of the first task.

In a possible implementation of a first aspect, the plurality of target tasks include a second task whose task type is interactive, and a target application corresponding to the second task is a second application. The communication unit 920 is specifically further configured to: send the system shutdown notification to the second application; receive a task completion notification sent by the second application, where the task completion notification is sent after the second application detects, based on the system shutdown notification, that the second task exists and completes processing of the second task based on a trigger operation of a user in an interaction interface; and send, based on the task completion notification according to the processing order of the plurality of target tasks, the system shutdown notification to a target application corresponding to a next target task of the second task.

In a possible implementation of the first aspect, the plurality of target tasks include a third task whose task type is non-interactive, and a target application corresponding to the third task is a third application. The communication unit 920 is further specifically configured to simultaneously send, at an interval of preset duration according to the processing order of the plurality of target tasks, a system shutdown notification to third applications corresponding to third tasks having a same priority, where the system shutdown notification indicates the third application to process the corresponding third task within the preset duration.

It should be understood that, for descriptions of the apparatus embodiment, refer to related descriptions of the foregoing embodiments of the system shutdown control method. Implementation principles and technical effects of the apparatus embodiment are similar to those of the foregoing method embodiments. Details are not described herein again.

It should be understood that the "unit" in the apparatus 900 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 920 may be replaced with a transceiver circuit (for example, the circuit may include a receiving circuit and a transmitting circuit) of a transceiver, and the processing unit 910 may be replaced with a processor or a processing circuit.

According to the method provided in the foregoing embodiments, embodiments of this application further provide the following content.

An embodiment of this application provides a computer program product. The computer program product includes computer program code. When the computer program code is run on a computer, the computer is enabled to perform the steps or procedures in any one of the foregoing method embodiments.

An embodiment of this application provides a computer-readable storage medium. The computer-readable storage medium stores program code. When the program code is run on a computer, the computer is enabled to perform the steps or procedures in any one of the foregoing method embodiments.

An embodiment of this application provides a chip. The chip includes a memory and a processor. The processor executes a computer program stored in the memory, to control the foregoing electronic device to perform the system shutdown control method in the foregoing embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person skilled in the art may clearly understand that, for the purpose of convenient and brief description, division into the foregoing functional units and modules is merely used as an example for illustration. During actual application, the foregoing functions may be allocated to different functional units and modules for completion according to a requirement. In other words, an inner structure of the apparatus is divided into different functional units or modules, to complete all or some of the foregoing functions. Functional units and modules in embodiments may be integrated into one processing unit, or each of the units may exist alone physically, or two or more units may be integrated into one unit. The integrated unit may be implemented in a form of hardware, or may be implemented in a form of software functional unit. In addition, specific names of the functional units and modules are merely for ease of distinguishing between the functional units and modules, but are not intended to limit the protection scope of this application. In the foregoing embodiments, descriptions of embodiments have respective focuses. For a part that is not described in detail or recorded in an embodiment, refer to related descriptions in other embodiments.

A person of ordinary skill in the art may be aware that, units and algorithm steps in the examples described with reference to embodiments disclosed in the specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

In embodiments provided in this application, it should be understood that the disclosed apparatus and method may be implemented in other manners. For example, the described system embodiment is merely an example. For example, division into the modules or units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments may be implemented. The computer program includes computer program code. The computer program code may be in a source code form, an object code form, an executable file form, some intermediate forms, or the like. The computer-readable medium may include at least: any entity or apparatus that can carry computer program code to a large-screen device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or a compact disc. In some jurisdictions, the computer-readable medium cannot be an electrical carrier signal or a telecommunication signal according to legislation and patent practices.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A system shutdown control method, wherein the method comprises:
in response to a shutdown operation, obtaining a plurality of target tasks to be processed before system shutdown and a task type of each target task;
determining a processing order of the plurality of target tasks based on the task type of each target task;
controlling, according to the processing order of the plurality of target tasks, a target application corresponding to each target task to process the target task; and
after processing of the plurality of target tasks is completed, controlling a system to be shut down.

2. The method according to claim 1, wherein the method further comprises: obtaining a priority of each target task; and
determining the processing order of the plurality of target tasks based on the task type of each target task comprises:
sorting the plurality of target tasks according to a preset correspondence between a task type and a processing order, to obtain a first sorting result;
adjusting, based on the priority of each target task, an order of target tasks of a same task type in the first sorting result, to obtain a second sorting result; and
determining the processing order of the plurality of target tasks based on the second sorting result.

3. The method according to claim 2, wherein determining the processing order of the plurality of target tasks based on the second sorting result comprises:
obtaining a generation time of each target task; and
adjusting, based on the generation time of each target task, an order of target tasks of a same task type that have a same priority in the second sorting result, to obtain the processing order of the plurality of target tasks.

4. The method according to any one of claims 1 to 3, wherein controlling, according to the processing order of the plurality of target tasks, the target application corresponding to each target task to process the target task comprises:
sequentially sending, according to the processing order of the plurality of target tasks, a system shutdown notification to the target application corresponding to each target task, wherein the system shutdown notification indicates the target application to process the corresponding target task.

5. The method according to claim 4, wherein the plurality of target tasks comprise a first task whose task type is shutdown takeover-capable, and a target application corresponding to the first task is a first application; and
sequentially sending, according to the processing order of the plurality of target tasks, the system shutdown notification to the target application corresponding to each target task comprises:
sending the system shutdown notification to the first application;
receiving a shutdown takeover notification sent by the first application, wherein the shutdown takeover notification indicates that the first application determines, based on the system shutdown notification, to continue to process the first task;
suspending system shutdown based on the shutdown takeover notification;
receiving a task completion notification sent by the first application; and
sending, based on the task completion notification according to the processing order of the plurality of target tasks, the system shutdown notification to a target application corresponding to a next target task of the first task.

6. The method according to claim 4, wherein the plurality of target tasks comprise a second task whose task type is interactive, and a target application corresponding to the second task is a second application; and
sequentially sending, according to the processing order of the plurality of target tasks, the system shutdown notification to the target application corresponding to each target task comprises:
sending the system shutdown notification to the second application;
receiving a task completion notification sent by the second application, wherein the task completion notification is sent after the second application detects, based on the system shutdown notification, that the second task exists and completes processing of the second task based on a trigger operation of a user in an interaction interface; and
sending, based on the task completion notification according to the processing order of the plurality of target tasks, the system shutdown notification to a target application corresponding to a next target task of the second task.

7. The method according to any one of claims 1 to 3, wherein the plurality of target tasks comprise a third task whose task type is non-interactive, and a target application corresponding to the third task is a third application; and
controlling, according to the processing order of the plurality of target tasks, the target application corresponding to each target task to process the target task comprises:
simultaneously sending, at an interval of preset duration according to the processing order of the plurality of target tasks, a system shutdown notification to third applications corresponding to third tasks having a same priority, wherein the system shutdown notification indicates the third application to process the corresponding third task within the preset duration.

8. A system shutdown control apparatus, comprising at least one unit configured to perform the method according to any one of claims 1 to 7.

9. An electronic device, comprising a processor, wherein the processor is configured to run a computer program stored in a memory, to implement the method according to any one of claims 1 to 7.

10. A computer-readable storage medium, wherein the computer-readable storage medium stores a computer program, and when the computer program is executed by a processor, the method according to any one of claims 1 to 7 is implemented.
